# EUROPEAN PATENT SPECIFICATION

(11) **EP 0 695 333 B1**
(45) Date of publication and mention of the grant of the patent: **13.08.1997**
(21) Application number: 94915527.9
(22) Date of filing: 19.04.1994
(51) Int. Cl.: C09K 7/02, C09K 7/00, E21B 21/06

(54) **REMOVING FINES FROM A SPENT AQUEOUS WELL TREATING FLUID**
Entfernung des Bohrkleins aus einer wässrigen Bohrspülung
PROCEDE D'EXTRACTIONS DES FINES D'UN FLUIDE DE TRAITEMENT DE PUITS

(30) Priority: 21.04.1993 EP 93201163
(43) Date of publication of application: 07.02.1996
(73) Proprietor: SHELL INTERNATIONALE RESEARCH MAATSCHAPPIJ B.V., 2596 HR Den Haag (NL)
(72) Inventor: KILLIE, Siv, NL-2288 GD Rijswijk (NL); HOORN, Johannes, Adriaan, Aris, 1531 LC WORMER (NL)
(86) International application number: EP9401239
(87) International publication number: WO9424224

(56) References cited:
- EP-A- 0 259 939
- EP-A- 0 373 695
- EP-A- 0 497 589
- US-A- 3 040 820
- US-A- 3 953 335
- US-A- 4 301 016

## Description

The present invention relates to removing fines from a spent aqueous well treating fluid which is being used in drilling a borehole in an underground formation to obtain a well in the formation. During drilling of a borehole in the formation drill cuttings accumulate in the aqueous well treating fluid. The larger particles can be removed by so-called shale shakers, and the smaller particles can be removed by hydrocyclones and decanting centrifuges. Other methods involve adding to the spent aqueous well treating fluid chemical flocculation agents to settle out the fines at surface, or diluting the spent aqueous well treating fluid with water to reduce the concentration of fines. See, for example, Development in Petroleum Science, 11, Drilling and Drilling Fluids, G.V. Chilingarian and P. Vorabutr, Elsevier, 1981, page 309-310.

In the specification and in the claims the expression 'well treating fluid' is used to refer to a fluid such as a drilling fluid, a completion fluid or a workover fluid.

A disadvantage of adding chemical flocculation agents is that a relatively large amount of flocculation agent is required, and a disadvantage of diluting the aqueous well treating fluid is that other well treating fluid components such as materials to increase density, organic polymers and mud-conditioning agents have to be replenished.

A further method to remove clay particles from spent aqueous well treating fluid comprises adding calcium chloride to an aqueous solution of colloid clay particles, see Composition and Properties of Oil Well Drilling Fluids, 4th Edition, G.R. Gray and H.C.H. Darley, page 164-167.

Applicant has found that this method cannot be applied in case the well treating fluid contains a viscosifier in the form of a water-soluble polymer, as this water-soluble polymer remains dissolved in the aqueous phase and, as a consequence, the fluid is too viscous to allow separation by means of centrifuging.

It was found that to obtain flocculation of the fines the spent aqueous well treating fluid should contain a salting-out anion and/or a slightly soluble calcium or magnesium compound.

Salting-out anions are also used to decrease the temperature at which the water-soluble polymer starts to precipitate (see Lyotropic Numbers of Anions From Cloud Point Changes of Nonioninc Surfactants, H. Schott, Colloids and Surfaces, 11 (1984), pages 51-54). An example of a salting-out anion is the formate ion see European patent application publication No. 259 939. Other examples of salting-out anions are the citrate anion, the acetate anion, the sulphate anion, the chloride anion, the nitrate anion and the iodine anion. The amount of salting-out anion will be larger than the amount corresponding to 1 kg salt of the salting-out anion per m³ of well treating fluid; the maximum amount can be as high as the saturation level which is for some salting-out anions an amount corresponding to about 800 kg salt of the salting-out anion per m³ of well treating fluid.

It was found that to improve flocculation of the fines the spent aqueous well treating fluid should contain a slightly soluble calcium or magnesium compound, wherein the expression "slightly soluble" is used to indicate that the solubility of the compound in water at room temperature is less than 1 g/l (gram per litre). Examples of the slightly soluble calcium or magnesium compounds are carbonates such as chalk (calcium carbonate) and dolomite (a carbonate of calcium and magnesium), sulphates such as gypsum (calcium sulphate), oxides such as lime (calcium oxide), and hydroxides. The slightly soluble compound can already be present in the well treating fluid, or it can be added to it before treatment starts. The amount of slightly soluble calcium or magnesium compound is suitably between 1 and 500 kg per m³ of well treating fluid, and more suitably between 1 and 200 kg per m³ of well treating fluid.

It is an object of the present invention to provide a method of removing fines from a spent aqueous well treating fluid, wherein only a small amount of chemicals is required to obtain precipitation of the fines.

To this end the method of removing fines from a spent aqueous well treating fluid containing, fines, a water-soluble polymer, a salting-out anion and/or a slightly soluble calcium or magnesium compound comprising the steps of
(a) raising the pH of the aqueous well treating fluid to allow agglomeration of the fines and precipitation of the water-soluble polymer; and
(b) separating the agglomerates from the aqueous well treating fluid.

In the specification and in the claims the word "fines" is used to refer to particles having a size up to 100 micrometer.

Applicant has found that when the dissolved slightly soluble compound is precipitated by raising the pH, the fines and the remainder of the compound serve as nuclei for the agglomerates that form from the precipitate. The particle size of the agglomerates is substantially larger than the particle size of the fines. Thus agglomeration is effected by changing the concentration of ions which are already in solution, and not by the presence of a flocculation agent.

Normally the pH of a well treating fluid is between 8 and 10.5. To increase the concentration of dissolved slightly soluble calcium or magnesium compound, prior to raising the pH, the pH of the aqueous well treating fluid is suitably lowered. Lowering the pH of the aqueous well treating fluid can be done by adding a suitable acid, for example hydrogen chloride; and raising the pH can be done by adding a suitable base, for example potassium hydroxide. Suitably the pH of the aqueous well treating fluid is lowered to in the range of from 5 to 7. And the pH of the aqueous well treating fluid is suitably raised to above 10, more suitably to in the range of from 11 to 14. After the fines are removed the pH of the aqueous well treating fluid is returned to the pH which the aqueous well treating fluid had before the treatment.

The water-soluble polymer can be any polymer that is used in an aqueous well treating fluid to increase the viscosity, for example a biopolymer such as a xanthan polymer, a succinoglycan polysaccharide, a scleroglycan polysaccharide or a cellulose polymer, or a synthetic polymer, such as an acrylate polymer. The amount of polymer in the aqueous well treating fluid is in the range of from 1 to 15 kg per m³.

It will be understood that the aqueous well treating fluid or the spent aqueous well treating fluid can already contain the slightly soluble calcium or magnesium compound in a sufficient amount. Alternatively, in the absence of such a compound in the aqueous well treating fluid or when the concentration is too low, the compound is added prior to the treatment to obtain an aqueous well treating fluid containing between 1 and 500 kg per m³ of well treating fluid, and more suitably between 1 and 200 kg per m³ of well treating fluid.

Although Applicant does not want to be limited to this description, it is at present assumed that the the effects of lowering and raising the pH on the components in the spent well treating fluid are the following:
(1) the salting out anion is dissolved in the spent well treating fluid, the salting out anion is not affected by lowering the pH or by raising the pH;
(2) the slightly soluble calcium or magnesium compound is dispersed in the spent well treating fluid, on lowering the pH it dissolves slightly and on raising the pH it precipitates.
(3) the polymer is dissolved in the spent well treating fluid, lowering the pH does not affect the polymer, on raising the pH the polymer starts to precipitate, however, when the spent drilling fluid does not contain the salting out anion the polymer is only slightly affected by raising the pH (not enough to cause precipitation) and the polymer gets enmeshed in agglomerates formed from precipitating slightly soluble calcium or magnesium compound;
(4) the drill cuttings are dispersed in the spent well treating fluid, on lowering the pH they are not affected, and on raising the pH they are enmeshed in agglomerates formed from precipitating slightly soluble calcium or magnesium compound (if present) and precipitating polymers (when they precipitate in the presence of the salting out anion).

The invention will now be described in more detail with reference to the below examples, wherein in the first example both a salting out anion in the form of a formate as well as a slightly soluble calcium compound in the form of chalk are present in the spent fluid, wherein in the second example only a salting out anion in the form of a formate is present in the spent fluid, and wherein in the third example only a slightly soluble calcium compound in the form of gypsum is present in the spent fluid.

Example 1. An amount of 28.5 g (gram) of drilled solids (particle size up to 100 micrometer) was added to 1 1 (litre) of well treating fluid including 460 g sodium formate, 160 g potassium chloride, 2.14 g xanthan polymer, 5.71 g AMPS-acrylate polymer (which is a copolymer of 2-acrylamido-2-methyl propane sulphonic acid ex Lubrizol), 5.71 g polyanionic cellulose polymer, 85.6 g chalk and 1.43 g sodium carbonate. The pH of the well treating fluid was 9.5. The plastic viscosity of the well treating fluid was 34 cP, the yield point was 23 Pa, and the apparent viscosity (at a shear rate of 1 020 1/s) was 47 cP. To this well treating fluid was slowly added while stirring 5 ml (millilitre) of an aqueous solution containing 360 g/l of hydrogen chloride. The pH of the well treating fluid decreased to 6.4, and part of the chalk dissolved. Subsequently 20 ml of an aqueous solution of 10 mol/l of potassium hydroxide was quickly added and the pH increased to 12. The plastic viscosity of the well treating fluid after changing the pH was 22 cP, the yield point was 3 Pa, and the apparent viscosity (at a shear rate of 1 020 1/s) was 26 cP.Large agglomerates were formed, and the viscosity of the spent aqueous well treating fluid had been sufficiently reduced to allow easy removing the large particles by centrifuging. The centrate contained less than 5% of the original solids and its apparent viscosity (at a shear rate of 1 020 1/s) was 9 cP, which is sufficiently low to facilitate filtering using Cellite (Trade Mark) as a filter aid.

Example 2. An amount of 28.5 g of drilled solids was added to 1 1 well treating fluid including 0.804 1 of 75% by weight potassium formate brine, 0.14 1 water, 1.6 g xanthan polymer, 5.4 g poly anionic cellulose polymer, 2.7 g AMPS-acrylate polymer, and 271.4 g manganese oxide (MnO₂). The pH of the well treating fluid was 8.9. The plastic viscosity was 27 cP and the yield point was 18 Pa. Added was 2.5 ml of an aqueous solution containing 10 mol/l of potassium hydroxide. The mixture was stirred carefully for 30 seconds. Thereafter it was centrifuged at 3000 G for 1 minute. The recovery was 53 % by volume of of clear centrate.

Example 3. An amount of 5.71 g of drilled solids (OCMA clay) was added to 1 1 well treating fluid which includes 0.95 1 water, 90 g potassium chloride, 10 g poly anionic cellulose polymer, 7.42 g gypsum, and potassium hydroxide (to pH - 9). To this was slowly added while stirring 1 ml of concentrated hydrochloric acid (37% by weight). Stirred for 5 minutes. Subsequently 4 ml of an aqueous solution of 10 mol/l of potassium hydroxide was quickly added. Stirred for 30 sec. Centrifuged at 3 000 rpm (revolutions per minute) for 1 minute. The recovery was 70% by volume of a clear liquid.

It will be understood that without changing the pH the well treating fluid is so viscous that the fines cannot be easily removed by centrifuging; after centrifuging under the same conditions the centrate was more turbid.

## Claims

1. Method of removing fines from a spent aqueous well treating fluid containing, fines, a water-soluble polymer, a salting-out anion and/or a slightly soluble calcium or magnesium compound comprising the steps of
(a) raising the pH of the aqueous well treating fluid to allow agglomeration of the fines and precipitation of the water-soluble polymer; and
(b) separating the agglomerates from the aqueous well treating fluid.

2. Method according to claim 1, wherein prior to raising the pH, the pH of the aqueous well treating fluid is lowered.

3. Method according to claim 2, wherein the pH of the aqueous well treating fluid is lowered to in the range of from 5 to 7.

4. Method according to anyone of the claims 1-3, wherein the pH of the aqueous well treating fluid is raised to above 10, suitably to in the range of from 11 to 14.

5. Method according to anyone of the claims 1-4, wherein the salting-out anion is a formate ion.

## Patentansprüche

1. Verfahren zur Entfernung von Feinanteilen aus einer gebrauchten wäßrigen Bohrungsbehandlungsflüssigkeit, enthaltend Feinanteile, ein wasserlösliches Polymer, ein aussalzendes Anion und/oder eine wenig lösliche Calcium- oder Magnesiumverbindung, bei dem man:
(a) den pH-Wert der wäßrigen Bohrungsbehandlungsflüssigkeit erhöht, damit die Feinanteile agglomerieren und das wasserlösliche Polymer ausfällt; und
(b) die Agglomerate von der wäßrigen Bohrungsbehandlungsflüssigkeit abtrennt.

2. Verfahren nach Anspruch 1, bei dem man vor der Erhöhung des pH-Werts den pH-Wert der wäßrigen Bohrungsbehandlungsflüssigkeit senkt.

3. Verfahren nach Anspruch 2, bei dem man den pH-Wert der wäßrigen Bohrungsbehandlungsflüssigkeit auf 5 bis 7 senkt.

4. Verfahren nach einem der Ansprüche 1-3, bei dem man den pH-Wert der wäßrigen Bohrungsbehandlungsflüssigkeit auf über 10, zweckmäßig auf 11 bis 14, erhöht.

5. Verfahren nach einem der Ansprüche 1-4, bei dem man als aussalzendes Anion ein Formiat-Ion einsetzt.

## Revendications

1. Procédé d'élimination de fines d'un liquide de traitement de puits aqueux épuisé contenant des fines, un polymère hydrosoluble, un anion relargant et/ou un composé du calcium ou du magnésium légèrement soluble, caractérisé en ce qu'il comprend les étapes consistant à
(a) augmenter le pH du liquide de traitement de puits aqueux pour permettre l'agglomération des fines et la précipitation du polymère hydrosoluble et
(b) séparer les agglomérés du liquide de traitement de puits aqueux.

2. Procédé suivant la revendication 1, caractérisé en ce que, préalablement à l'élévation du pH, on abaisse le pH du liquide de traitement de puits aqueux.

3. Procédé suivant la revendication 2, caractérisé en ce que l'on abaisse le pH du liquide de traitement de puits aqueux jusque dans la plage de 5 à 7.

4. Procédé suivant l'une quelconque des revendications 1 à 3, caractérisé en ce que l'on élève le pH du liquide de traitement de puits aqueux au-delà de 10, de manière appropriée, jusque dans la plage de 11 à 14.

5. Procédé suivant l'une quelconque des revendications 1 à 4, caractérisé en ce que l'anion relargant est un ion formiate.
